# EUROPEAN PATENT SPECIFICATION

(11) **EP 1 359 568 B1**
(45) Date of publication and mention of the grant of the patent: **13.06.2007**
(21) Application number: 03009340.5
(22) Date of filing: 24.04.2003
(51) Int. Cl.: G11B 5/40

(54) **Hard disk drive having disk protector and magnetic head protector**
Festplatteantrieb mit Platte- und Magnetischekopfschutz
Unitè de disque dur avec protection pour le disque et la téte magnetique

(30) Priority: 03.05.2002 KR 2002024440; 13.07.2002 KR 2002040992
(43) Date of publication of application: 05.11.2003
(73) Proprietor: SAMSUNG ELECTRONICS CO., LTD., Suwon-City, Kyungki-do (KR)
(72) Inventor: Choi, Byoung-gyou, Gwonseon-gu, Suwon-si, Gyeonggi-do (KR)
(74) Representative: Grünecker, Kinkeldey, Stockmair & Schwanhäusser Anwaltssozietät

(56) References cited:
- US-A- 5 239 431
- US-A- 5 757 587
- US-A- 6 067 209
- US-B1- 6 212 029
- US-B1- 6 292 333

## Description

### BACKGROUND OF THE INVENTION

### 1. Field of the Invention

The present invention relates to a hard disk drive and more particularly, to a hard disk drive having a disk protector and a magnetic head protector for protecting a disk from an external impact.

### 2. Description of the Related Art

A hard disk drive (HDD), one type of auxiliary memory devices of a computer, reads data stored in a magnetic disk or records data on the magnetic disk through the use of a magnetic head.

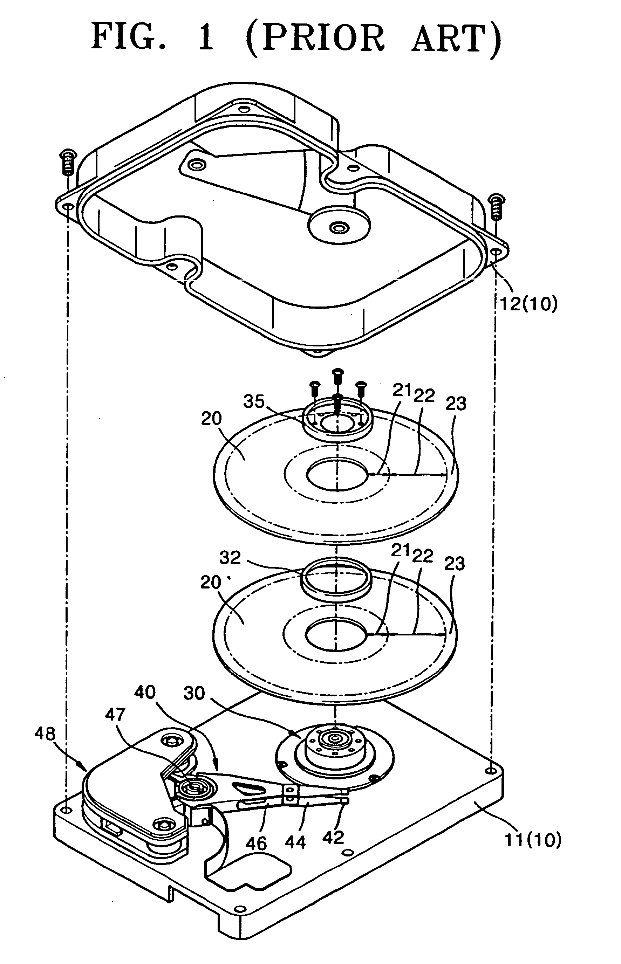

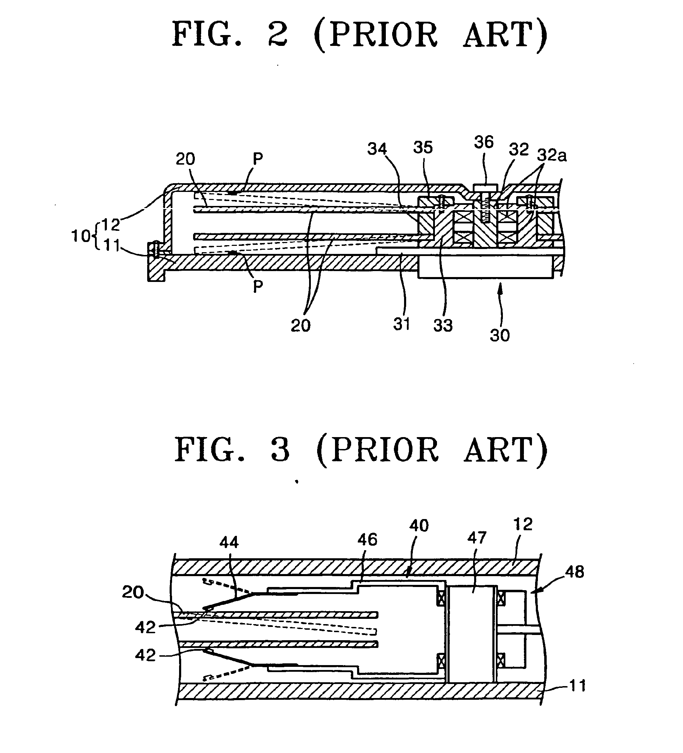

FIG. 1 is a perspective view showing a conventional hard disk drive. FIG. 2 is a vertical section view of the hard disk drive shown in FIG. 1.

Referring to FIG. 1, a conventional hard disk drive includes a housing 10, a spindle motor 30 installed in the housing 10 for rotating a magnetic disk (hard disk) 20, and an actuator 40 having a magnetic head (not shown) for recording data on the disk 20 and reproducing the data recorded on the disk 20.

The housing 10 is installed in a main body (not shown) of a computer (not shown) and includes a base plate 11 supporting both the spindle motor 30 and the actuator 40 and a cover plate 12 coupled to an upper portion of the base plate 11 to enclose and protect the disk 20. Typically, the housing 10 is formed of stainless steel or aluminum.

The disk 20 is a recording medium on which data is recorded. One or a plurality of disks can be provided to be spaced a predetermined distance from one another. The disk 20 is rotated by the spindle motor 30. The disk 20 includes a parking zone 21 provided at the inner circumferential side of the disk 20 where a slider 42 having the magnetic head mounted thereon is disposed when the power is turned off and a data zone 22 provided at the outer circumferential side of the parking zone 21 where magnetic signals are recorded. Reference numeral 23 denotes a zone outside the data zone 22 where data is not actually recorded.

The coupling structure of the housing 10, the spindle motor 30, and the magnetic disk 20 will be described in detail with reference to FIGS. 2 and 3. The spindle motor 30 is supported by the flange 31, which is fixedly installed on the base plate 11. Typically, an upper end portion of a shaft of the spindle motor 30 is fixedly coupled to the cover plate 12 by a screw 36. A bearing 32a is typically provided around the outer circumference of the shaft 32 so that a hub 33 is to be rotated. The disk 20 is inserted around the outer circumference of the hub 33. When a plurality of disks 20 are installed, a ring shaped spacer 34 is installed around the outer circumference of the hub 33 to maintain a gap between the disks 20. A clamp 35 is coupled to the upper end portion of the hub 33 to prevent the disk 20 from escaping.

Referring back to FIG. 1, the actuator 40 can pivot around a pivot shaft 47 installed on the base plate 11 by a voice coil motor 48. The actuator 40 includes an arm 46 coupled to the pivot shaft 47 to be capable of pivoting and a suspension 44 coupled to the arm 46 for supporting the slider 42 having the magnetic head mounted thereon to be elastically biased toward the surface of the disk 20.

In the conventional hard disk drive having the above structure, the slider 42 is disposed in the parking zone 21 of the disk 20 by an elastic force of the suspension 44 when the power is turned off. When the power is turned on, the disk 20 begins to rotate and a lifting force is generated by air pressure so that the slider 42 is lifted. The slider 42 in a lifted state is moved to the data zone 22 of the disk 20 as the arm 46 of the actuator 40 rotates. The slider 42, which is moved to the data zone 22 of the disk 20, maintains a lifted state at a height where the lifting force by the rotation of the disk 20 and the elastic force by the suspension 44 are balanced. The magnetic head mounted on the slider 42 records and reproduces data with respect to the disk 20 while maintaining a predetermined distance from the rotating disk 20.

However, when an impact is applied from outside to the conventional hard disk drive, the disk 20 installed in the housing 10 either be shaken or warped. If the impact is over a predetermined amount, the disk 20 collides with the base plate 11 and/or the cover plate 12. Here, since the outer circumferential side of the disk 20 where no data is recorded actually contacts the base plate 11 or the cover plate 12, the data zone 22 of the disk 20 does not directly contact the base plate 11 or the cover plate 12. However, if a protruding eject pin, bur, or foreign material P exists on the upper surface of the base plate 11 or the lower surface of the cover plate 12 corresponding to the data zone 22 of the disk 20, when the disk 20 collides with the base plate 11 or the cover plate 12, the foreign material may contact the data zone 22 of the disk 20 so that the data zone 22 of the disk 20 may be damaged.

Also, when the suspension 44 in an elastically biased state is bent by an external impact in a direction opposite to a direction in which the elastic force is applied, as shown in FIG. 3, and then bent back by an elastic restoring force to contact the surface of the disk 20, the magnetic head becomes damaged by the impact between the magnetic head mounted on the slider 42 and the disk 20.

US Pat. No. 5 757 587 discloses a DASD which includes a plurality of motion limiters projecting from at least one of the base and cover each motion limiter having faces disposed in close proximity to and confronting opposite surfaces of a data storage disk adjacent a peripheral portion of the disk that does not contain data.

### SUMMARY OF THE INVENTION

US Pat. No 5 239 431 discloses a head lift limiter for a disk drive where said limiter comprises on each disk spacer a flange, which projects between the confronting back sides of the magnetic heads, in a plane parallel to the disk surfaces and thus limits displacement of said heads from said disk surface.

To solve the above and other problems, the present invention provides a hard disk drive having a disk protector and a magnetic head protector provided at the base plate and the cover plate to prevent a damage to the data zone of the disk and magnetic head by an external impact, as set forth in claim 1.

Preferred embodiments are defined in the dependent claims.

### BRIEF DESCRIPTION OF THE DRAWINGS

The above advantages of the present invention will become more apparent by describing in detail preferred embodiments thereof with reference to the attached drawings in which:
FIG. 1 is an exploded perspective view of a conventional hard disk drive;
FIG. 2 is a vertical section view of the hard disk drive of FIG. 1, showing a state in which the disk is damaged by an external impact;
FIG. 3 is a vertical section view of the hard disk drive of FIG. 1, showing a state in which the suspension is bent by an external impact;
FIG. 4 is an exploded perspective view of a hard disk drive having a disk and magnetic head protector according to a preferred embodiment of the present invention;
FIG. 5 is a vertical section view showing a portion where the disk protector shown in FIG. 4 is provided when the disk is deformed by an external impact;
FIG. 6 is a vertical section view showing a portion where the magnetic head protector shown in FIG. 4 is provided when the suspension is deformed by an external impact;
FIG. 7 is an enlarged perspective view of the disk protector shown in FIG. 4; and
FIG. 8 is an exploded perspective view of a modified example of the hard disk drive having a disk protector and a magnetic head protector according to the present invention.

### DETAILED DESCRIPTION OF THE INVENTION

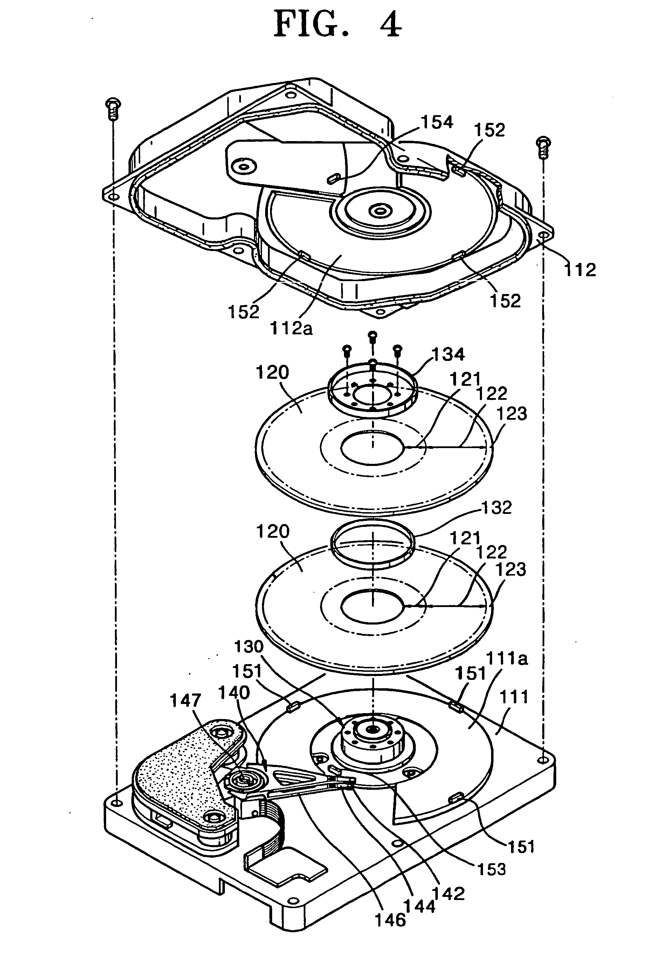

Referring to FIGS. 4 through 6, a hard disk drive having a disk protector and a magnetic head protector according to a preferred embodiment of the present invention includes a housing 110 having a predetermined inner space. In the housing 110, there is provided a spindle motor 130, a magnetic disc 120, an actuator 140, disk protectors 151 and 152, and magnetic head protectors 153 and 154.

The housing 110 is installed in a main body (not shown) of a computer (not shown) and includes a base plate 111 for supporting the spindle motor 130 and the actuator 140 and a cover plate 112 coupled to an upper portion of the base plate 111 for enclosing and protecting the disk 120. The housing 110 is typically manufactured of stainless steel or aluminum. Protruding surfaces 111a and 112a protruding a predetermined height toward the disk 120 are formed on the upper surface of the base plate 111 and the lower surface of the cover plate 112, respectively. These protruding surfaces 111a and 112a reduce disk fluttering by reducing the gap between the disk 120 and the respective base and cover plates 111 and 112. In the present preferred embodiment, a portion of the protruding surfaces 111 a and 112a which is intervened from the rotation of an arm 146 of the actuator 140 is removed and forms a "C" shape as a whole.

One or a plurality of disks 120 are installed inside the housing 110 as a recording medium for recording data. A parking zone 121 where a slider 142 having a magnetic head (not shown) mounted thereon is disposed when the power is turned off is provided at the inner circumferential side of the disk 120. A data zone 122 where a magnetic signal is recorded is provided outside the parking zone 121. However, data is not recorded in a portion outside the data zone 122, that is, an edge portion 123 of the disk 120.

The spindle motor 130 for rotating the disk 120 is fixedly installed on the base plate 111. When a plurality of disks 120 are installed on the spindle motor 130, a ring shaped spacer 132 for maintaining a gap between the disks 120 is inserted between the disks 120. A clamp 134 preventing the disks 120 from escaping is coupled to the upper end portion of the spindle motor 130.

The actuator 140 for recording data on the disk 120 or reading the data recorded therefrom is installed on the base plate to be capable of pivoting. The actuator 140 includes the arm 146 coupled to a pivot shaft 147 to be capable of pivoting and a suspension 144 coupled to the arm 146 for supporting the slider 142 having the magnetic head to be elastically biased toward the surface of the disk 120.

In the hard disk drive according to the present invention, disk protectors 151 and 152 are provided. The disk protectors 151 and 152 are disk protecting means to prevent a foreign material P contacting the data zone 122 of the disk 120 when the disk 120 is shaken or deformed by an external impact.

The disk protectors 151 and 152 protrude to a predetermined height toward the disk 120 at positions corresponding to the edge portion 123 of the disk 120 from the protruding surfaces 111 a and 112a of the base plate 111 and the cover plate 112, respectively Three disk protectors 151 and 152 are respectively provided on each of the protruding surfaces 111a and 112a at intervals of about 90° along the circumference of the disk 120, as shown in FIG. 4. The disk protector 151 formed on the protruding surface 111a of the base plate 111 and the disk protector 152 formed on the protruding surface 112a of the cover plate 112 are arranged at positions corresponding to each other. In the meantime, unlike the above description, the number of the disk protectors 151 and 152 that may be respectively provided on the protruding surfaces 111 a and 112a can be one at the opposite position to the actuator 140, or two, four, or more at predetermined intervals.

Also, in the hard disk drive according to the present invention, the magnetic head protectors 153 and 154 are provided as a magnetic head protecting means to prevent damage to the magnetic head mounted on the slider 142, when the suspension 144 is shaken or deformed and contacts the surface of the disk 120 by an external impact.

The magnetic head protectors 153 and 154 respectively protrude to a predetermined height toward the suspension 144 at positions on the inner surfaces of the base plate 111 and the cover plate 112 corresponding to the position of the suspension 144 in the parking zone 121 of the disk 120. The magnetic head protector 153 formed on the base plate 111 and the magnetic head protector 154 formed on the cover plate 112 are arranged at positions corresponding to each other.

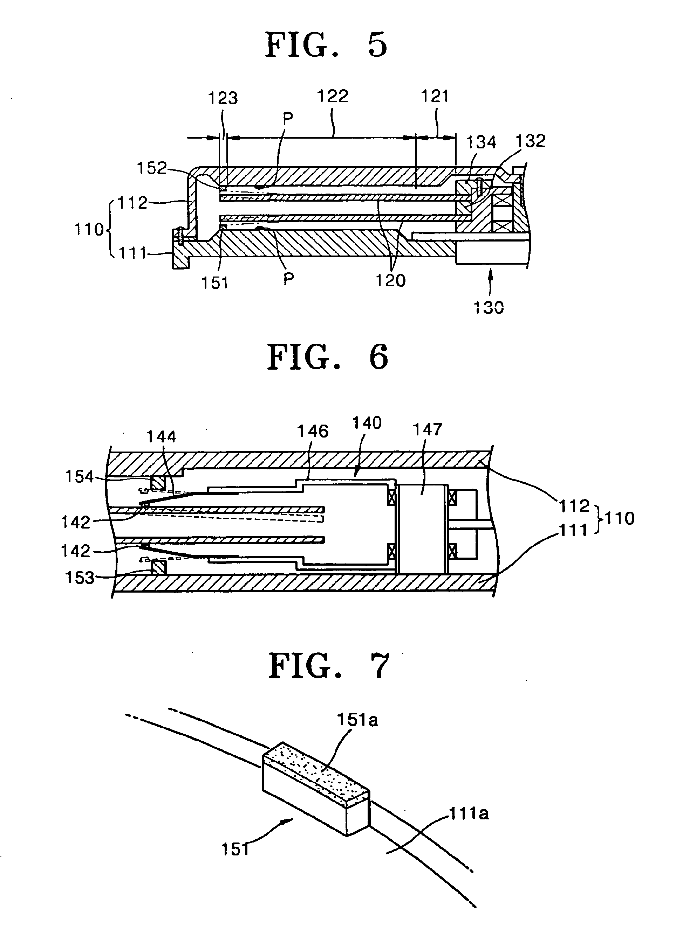

As the magnetic head protectors 153 and 154 are formed to protrude from the inner surface of the base plate 111 and the cover plate 112, the displacement of the suspension 144 by the external impact is restricted. Thus, as shown in FIG. 6, even when the suspension 144 is deformed by the external impact, since the displacement thereof is very little, the amount of impact applied to the disk 120 by the magnetic head mounted on the slider 142 through a restoring force from the suspension 144 is reduced so that the magnetic head is protected.

The disk protectors 151 and 152 and the magnetic head protectors 153 and 154 may be integrally formed with the base plate 111 and the cover plate 112, respectively. This is to simplify a manufacturing process and reduce manufacturing costs by simultaneously forming the disk protectors 151 and 152 and the magnetic head protectors 153 and 154 when the base plate 111 and the cover plate 112 are manufactured. However, it is possible to fixedly install the disk protectors 151 and 152 and the magnetic head protectors 153 and 154 onto the protruding surfaces 111 a and 112a of the base plate 111 and the cover plate 112 after the disk protectors 151 and 152 and the magnetic head protectors 153 and 154 are manufactured as supplementary members.

FIG. 7 is an enlarged perspective view of the disk protector 151 shown in FIG. 4. Although FIG. 7 shows only the disk protector 151 formed on the protruding surface 111a of the base plate 111, the disk protector 152 formed on the cover plate 112 and the magnetic head protectors 153 and 154 are not shown since they have the same shape.

As shown in the drawing, a buffer member 151 a is preferably provided at the surface of the disk protector 151 to be positioned towards the disk 120 so that the disk 120 contacts the buffer member 151 a when the disk 120 is shaken or warped. The buffer member 151 a has elasticity and the rigidity of the buffer member 151 a that is lower than that of the surface of the disk 120 and can be formed of an viscoelastic material such as natural rubber or synthetic rubber. The buffer member 151 a prevents damage on the surface of the disk 120 by absorbing an external impact when the disk 120 collides against the disk protector 151 from the external impact, and the generation of particles caused by damage on the surface of the disk 120. If particles are generated from damage to the surface of the disk 120, not only is the data zone 122 of the disk 120 damaged, but the performance of the magnetic head for data recording and reproducing is lowered. Thus, it is preferable to prevent the generation of the particles if possible.

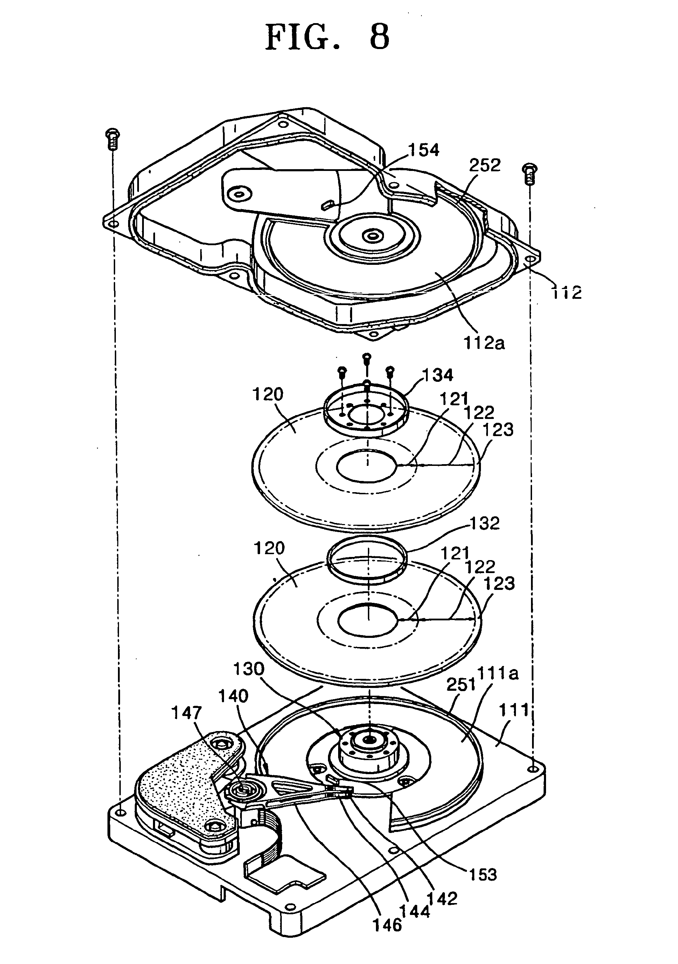

FIG. 8 is an exploded perspective view of a modified example of a hard disk drive having a disk protector and a magnetic head protector according to the present invention. Here, the same reference numerals as those in FIG. 4 indicate the same elements.

Referring to FIG. 8, disk protectors 251 and 252 are formed to face an entire edge portion 123 of the disk 120, except for a range in which the actuator 140 operates. That is, the disk protectors 251 and 252 are formed to have a "C" shape having an open portion interfering with the arm 146 of the actuator 140. The installation method and operation of the disk protectors 251 and 252 in the present embodiment are the same as those in the above-described previous preferred embodiment. Also, in the present preferred embodiment, a buffer member may be provided on the surface of each of the disk protectors 251 and 252 facing the disk 120, as shown in FIG. 7.

As described above, according to the present invention, when an external impact is applied to the hard disk drive so that the disk is shaken or warped, since the data zone of the disk is prevented from contacting the base plate or the cover plate by the disk protectors, the data zone of the disk is prevented from being damaged. Also, since the amount of displacement of the suspension is restricted by the magnetic head protectors, the amount of impact between the magnetic head and the disk is reduced so that the magnetic head is prevented from being damaged.

While this invention has been particularly shown and described with reference to preferred embodiments thereof, it will be understood by those skilled in the art that various changes in form and details may be made therein without departing from the spirit and scope of the invention as defined by the appended claims. For example, although the disk protectors in the preferred embodiments are provided on the protruding surfaces of the base plate and the cover plates, the disk protectors of the present invention can be applied to a base plate and a cover plate where the protruding surfaces are not formed as shown in FIG. 1.

## Claims

1. A hard disk drive comprising:
a housing (110) having a base plate (111) and a cover plate(112);
a spindle motor (130) installed on the base plate (111);
at least one disk (120) for storing data installed at the spindle motor (130) and rotated by the spindle motor (130);
an actuator (140) installed on the base plate (111) to be capable of pivoting and having a magnetic head for recording data on the disk (120) and reproducing the data from the disk (120);
said actuator (140) includes an arm (146) and a suspension (144) coupled to the arm (146) for supporting a slider (142) having said magnetic head;
at least one disk protector (151,152) provided on an upper surface of the base plate (111) and/or a lower surface of the cover plate (112), the at least one disk protector (151,152) protruding to a predetermined height toward the disk at a position corresponding to an edge portion of the disk (120) where data is not recorded; and
at least one magnetic head protector (153,154) provided on an upper surface of the base plate (111) and/or a lower surface of the cover plate (112),
**characterized in that**
said at least one magnetic head protector (153,154) protrudes from said upper surface of the base plate (111) and/or said lower surface of the cover plate (112) to a predetermined height toward the suspension (144) in a parking zone (121) located inside the inner circumferential side of the disk (120) where the magnetic head is parked.

2. The hard disk drive as claimed in claim 1, wherein a protruding surface (111a, 112a) protruding to a predetermined height toward the disk (120) is formed on each of the upper surface of the base plate (111) and the lower surface of the cover plate (112) to reduce a gap between the disk (120) and each of the base plate (111) and the cover plate (112), and the disk protector (151,152) is formed on the protruding surface (111a, 112a).

3. The hard disk drive as claimed in either claim 1 or claim 2, wherein a plurality of the disk protectors are formed with a predetermined interval in a circumferential direction of the disk (120).

4. The hard disk drive as claimed in claim 1, 2 or 3, wherein three disk protectors are formed on each of the base plate (111) and the cover plate (112).

5. The hard disk drive as claimed in any one of claims 1 to 4, wherein the disk protector is formed to have a C shape in which a portion interfering with the actuator is open to face an edge portion of the disk (120).

6. The hard disk drive as claimed in any one of claims 1 to 5, wherein a buffer member is provided on a surface of the disk protector to face the disk.

7. The hard disk drive as claimed in claim 6, wherein the buffer member is formed of a viscoelastic material having a surface rigidity lower than that of the disk.

8. The hard disk drive as claimed in any one of claims 1 to 7, wherein a buffer member is provided on a surface of the magnetic head protector to face the suspension.

9. The hard disk drive as claimed in claim 7 or 8, wherein the buffer member is formed of a viscoelastic material having a surface rigidity lower than that of the disk.

## Patentansprüche

1. Festplattenlaufwerk, das folgendes umfasst:
ein Gehäuse (110) mit einer Grundplatte (111) und einer Deckplatte (112);
einem Spindelmotor (130), der auf der Grundplatte (111) installiert ist;
mindestens eine Scheibe (120), um Daten zu speichern, die an dem Spindelmotor (130) installiert ist und die durch den Spindelmotor (130) gedreht wird;
einen Aktuator (140), der schwenkbar auf der Grundplatte (111) installiert ist und der einen Magnetkopf aufweist, um Daten auf der Scheibe (120) aufzuzeichnen und um Daten von der Scheibe (129) zu reproduzieren, wobei der Aktuator (140) einen Arm (146) und eine Federung (144), der an den Arm (146) gekoppelt ist, einschließt, um einen Schleifer (142) mit dem Magnetkopf zu lagern;
mindestens eine Scheibenschutzvorrichtung (151, 152), die an einer oberen Oberfläche der Grundplatte (111) und/oder einer unteren Oberfläche der Deckplatte (112) bereitgestellt ist, wobei die mindestens eine Scheibenschutzvorrichtung (151, 152) bis zu einer vorbestimmten Höhe in Richtung der Scheibe (120) an einer Position vorsteht, die einer Randposition der Scheibe (120) entspricht, wo Daten nicht aufgezeichnet werden; und
mindestens eine Magnetkopfschutzvorrichtung (153, 154), die an einer oberen Oberfläche der Grundplatte (111) und/oder einer unteren Oberfläche der Deckplatte (112) bereitgestellt ist;
**dadurch gekennzeichnet, dass**
die mindestens eine Magnetkopfschutzvorrichtung (153, 154) von der oberen Oberfläche der Grundplatte (111) und/oder der unteren Oberfläche der Deckplatte (112) bis zu einer vorbestimmten Höhe in Richtung der Federung (144) in einer Parkzone vorsteht, die innerhalb der inneren Umfangsseite der Scheibe (120) liegt, wo der Magnetkopf geparkt wird.

2. Festplattenlaufwerk gemäß Anspruch 1, worin eine vorstehende Oberfläche (111a, 112a), die bis zu einer vorbestimmten Höhe in Richtung der Scheibe (120) vorsteht, auf jeweils der oberen Oberfläche der Grundplatte (111) und der unteren Oberfläche der Deckplatte (112) ausgebildet ist, um eine Lücke zwischen der Scheibe (120) und sowohl der Grundplatte (111) als auch der Deckplatte (112) zu reduzieren, und wobei die Scheibenschutzvorrichtung (151, 152) auf der vorstehenden Oberfläche (111a, 112a) ausgebildet ist.

3. Festplattenlaufwerk gemäß einem der Ansprüche 1 oder 2, worin eine Vielzahl von Scheibenschutzvorrichtungen mit einem vorbestimmten Intervall auf in einer Umfangsrichtung der Scheibe (120) ausgebildet ist.

4. Festplattenlaufwerk gemäß Anspruch 1, 2 oder 3, worin drei Scheibenschutzvorrichtungen auf jeweils der Grundplatte (111) und der Deckplatte (112) ausgebildet sind.

5. Festplattenlaufwerk gemäß einem der Ansprüche 1 bis 4, worin die Scheibenschutzvorrichtung so ausgebildet ist, dass sie eine C-Form aufweist, in der ein Bereich, der den Aktuator störend beeinflusst, offen liegt, so dass er einem Randbereich der Scheibe (120) gegenüberliegt.

6. Festplattenlaufwerk gemäß einem der Ansprüche 1 bis 5, worin ein Pufferelement auf einer Oberfläche der Scheibenschutzvorrichtung bereitgestellt ist, so dass es zur Scheibe gerichtet ist.

7. Festplattenlaufwerk gemäß Anspruch 6, worin das Pufferelement aus einem viskoelastischem Material gebildet ist, mit einer Oberflächenfestigkeit, die kleiner ist als die der Scheibe.

8. Festplattenlaufwerk gemäß einem der Ansprüche 1 bis 7, worin ein Pufferelement auf einer Oberfläche der Magnetkopfschutzvorrichtung bereitgestellt ist, so dass es zur Federung gerichtet ist.

9. Festplattenlaufwerk gemäß Anspruch 7 oder 8, worin das Pufferelement aus einem viskoelastischem Material gebildet ist, mit einer Oberflächenfestigkeit, die kleiner ist als die der Scheibe.

## Revendications

1. Unité de disque dur comprenant :
un logement (110) ayant une plaque de base (111) et une plaque de couvercle (112) ;
un moteur à axe (130) installé sur la plaque de base (111) ;
au moins un disque (120) pour stocker des données installé au niveau du moteur à axe (130) et mis en rotation par le moteur à axe (130) ;
un actionneur (140) installé sur la plaque de base (111) de manière à pouvoir pivoter et ayant une tête magnétique pour enregistrer des données sur le disque (120) et reproduire les données à partir du disque (120) ; ledit actionneur (140) comprend un bras (146) et une suspension (144) couplée au bras (146) pour supporter un coulisseau (142) ayant ladite tête magnétique ;
au moins un élément protecteur de disque (151, 152) prévu sur une surface supérieure de la plaque de base (111) et/ou une surface inférieure de la plaque de couvercle (112), l'au moins un élément protecteur de disque (151, 152) faisant saillie à une hauteur prédéterminée vers le disque en une position correspondant à une partie de bord du disque (120) où des données ne sont pas encore enregistrées ; et
au moins un élément protecteur de tête magnétique (153, 154) prévu sur une surface supérieure de la plaque de base (111) et/ou une surface inférieure de la plaque de couvercle (112),
**caractérisée en ce que**
ledit au moins un élément protecteur de tête magnétique (153, 154) faisant saillie depuis ladite surface supérieure de la plaque de base (111) et/ou ladite surface inférieure de la plaque de couvercle (112) à une hauteur prédéterminée vers la suspension (144) dans une zone de parcage (121) située à l'intérieur du côté circonférentiel interne du disque (120), où la tête magnétique est parquée.

2. Unité de disque dur selon la revendication 1, dans laquelle une surface en saillie (111a, 112a) faisant saillie à une hauteur prédéterminée vers le disque (120) est formée sur la surface supérieure de la plaque de base (111) ainsi que sur la surface inférieure de la plaque de couvercle (112) pour réduire un intervalle entre le disque (120) et chacune de la plaque de base (111) et de la plaque de couvercle (120), et l'élément protecteur de disque (151, 152) est formé sur la surface en saillie (111a, 112a).

3. Unité de disque dur selon la revendication 1 ou 2, dans laquelle une pluralité d'éléments protecteurs de disque sont formés à un intervalle prédéterminé dans une direction circonférentielle du disque (120).

4. Unité de disque dur selon la revendication 1, 2 ou 3 dans laquelle trois éléments protecteurs de disque sont formés sur chacune de la plaque de base (111) et de la plaque de couvercle (112).

5. Unité de disque dur selon l'une quelconque des revendications 1 à 4, dans laquelle l'élément protecteur de disque est formé pour avoir une forme en C dans laquelle une partie interférant avec l'actionneur est ouverte pour faire face à une partie de bord du disque (120).

6. Unité de disque dur selon l'une quelconque des revendications 1 à 5, dans laquelle un élément amortisseur est prévu sur une surface de l'élément protecteur de disque pour faire face au disque.

7. Unité de disque dur selon la revendication 6, dans laquelle l'élément amortisseur est formé d'un matériau viscoélastique ayant une rigidité de surface inférieure à celle du disque.

8. Unité de disque dur selon l'une quelconque des revendications 1 à 7, dans laquelle un élément amortisseur est prévu sur une surface de l'élément protecteur de tête magnétique pour faire face à la suspension.

9. Unité de disque dur selon la revendication 7 ou 8, dans laquelle l'élément élément est formé d'un matériau viscoélastique ayant une rigidité de surface inférieure à celle du disque.
